(19) Europäisches Patentamt
European Patent Office
Office européen des brevets

(11) EP 3 574 986 A1

(12) **EUROPEAN PATENT APPLICATION**

(43) Date of publication:
**04.12.2019 Bulletin 2019/49**

(51) Int Cl.:
***B01D 69/08*** (2006.01) ***B01D 71/68*** (2006.01)

(21) Application number: **18175151.2**

(22) Date of filing: **30.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **3M Innovative Properties Company**
**Saint Paul, MN 55133-3427 (US)**

(72) Inventors:
- **Malek, Daniel**
  **42329 Wuppertal (DE)**
- **Weuster, Stefan**
  **42899 Remscheid (DE)**
- **Schneider, Dr. Frank**
  **42349 Wuppertal (DE)**
- **Kurov, Alexey**
  **63739 Aschaffenburg (DE)**
- **Holt, Andreas**
  **42289 Wuppertal (DE)**

(74) Representative: **Hettstedt, Stephan**
**3M Deutschland GmbH**
**3M Office for Intellectual Property Counsel**
**Carl-Schurz-Strasse 1**
**41453 Neuss (DE)**

# (54) MEMBRANE FOR CAPILLARY MICROFILTRATION

(57) The present disclosure provides a hydrophilic, integrally asymmetric, semi-permeable hollow-fiber membrane made from a hydrophobic aromatic sulfone polymer and at least one hydrophilic polymer, the membrane comprising an inner surface facing towards its lumen, an outer surface facing outwards and an intermediate wall having a wall thickness and comprising an open-pore separating layer and an supporting layer having an asymmetric, sponge-like structure without finger pores, wherein adjoining to the wall of the inner surface the hollow-fiber membrane comprises an essentially isotropic zone; after which the pore size abruptly start increasing up to a maximum, after which the pore size decrease again, then adjoining a an essentially isotropic supporting layer which then is adjoined by the outer surface, wherein the separating layer has a cut-off of greater than 300 000 Daltons. The present disclosure further provides a method for producing such membranes and a use of the membranes for microfiltration purposes.

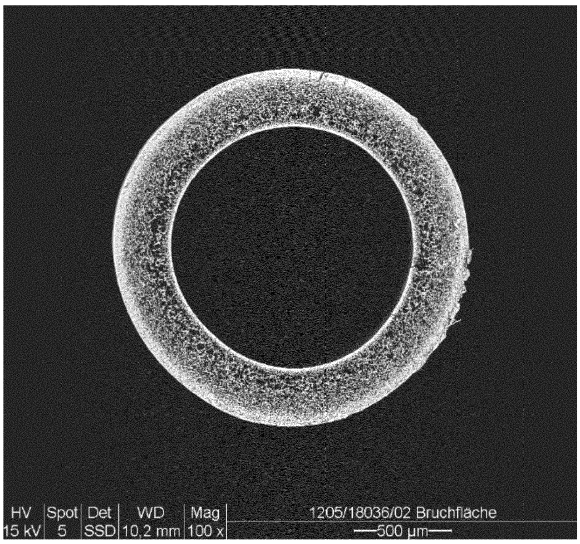


Figure 3

EP 3 574 986 A1

## Description

### Field

The present disclosure relates to microporous polyethersulfone membranes. In addition, the present disclosure relates to a process for producing such membranes. The present disclosure further relates to use of such membranes for filtration and purification of liquid media.

### Background

Polymer membranes are employed in a very wide range of different industrial, pharmaceutical or medical applications for precision filtration. In these applications, membrane separation processes are gaining in importance, as these processes offer the advantage that the substances to be separated are not thermally burdened or even damaged. Ultrafiltration membranes can be employed for the removal or separation of macromolecules. Numerous further applications of membrane separation processes are known from the beverages industry, biotechnology, water treatment or sewage technology. Such membranes are generally classified according to their retention capacity, i. e. according to their capacity for retaining particles or molecules of a certain size, or with respect to the size of the effective pores, i. e. the size of the pores that determine the separation behaviour. Ultrafiltration membranes thereby cover the size range of the pores determining the separation behaviour between roughly 0.01 and approx. 0.1 $\mu$m, so that particles or molecules with a size in the range larger than 20 000 or larger than approx. 200 000 Daltons can be retained.

A further distinction between the membranes can be made with respect to the pore structure of the membranes, i. e. with respect to the size of the pores over the membrane wall. Here a distinction can be made between symmetric membranes, i. e. membranes in which the pore size on both sides of the membrane wall is essentially the same, and asymmetric membranes in which the pore size on the two sides of the membrane is different. Asymmetric membranes generally have a separating layer with a minimal pore size that determines the separation characteristics of the membrane, and adjoining the separating layer a supporting layer with larger pores that is responsible for the mechanical stability of the membrane. An integrally asymmetric membrane is understood to be one having at least one separating layer and one supporting layer, the separating and supporting layers consisting of the same material and being formed simultaneously during the production of the membrane. As a result, both layers are bound together as an integral unit. At the transition from the separating layer to the supporting layer there is merely a change with respect to the membrane structure. Integrally asymmetric membranes and methods for their production are described e. g. in EP 0361 085 B1.

In contrast to integrally asymmetric membranes, composite membranes have a multilayer structure resulting from the fact that a separating layer is applied to a previously produced (micro)porous supporting layer or supporting membrane in a subsequent, i. e. separate, process step such as coating with a film-forming polymer, or grafting with a monomer forming this polymer. As a result, the materials forming the supporting layer and the separating layer in composite membranes also have different properties. At the transition from the separating layer to the supporting layer there is therefore an inhomogeneity with respect to the material forming the membrane in composite membranes.

In order to be able to perform microfiltration applications cost-effectively, membranes are required that exhibit high filtration rates. In order to achieve these high filtration capacities, the membranes are generally subjected to high pressures. An essential criterion for the evaluation of the membranes is therefore their permeability or transmembrane flow, with the permeability being defined as the volume of fluid passing through the membrane per unit of area of the membrane, and per unit of time and pressure. In addition, the mechanical strength or stability of the hollow fiber membrane is an important evaluation criterion.

In many cases, membranes made from sulfone polymers such as polysulfone or polyether sulfone are employed for applications in the ultrafiltration sector, not least due to their high chemical stability towards i. a. acids or alkalis, their temperature stability or the sterilisability of the membranes made from these materials.

US-A-5 928 774 discloses asymmetric ultrafiltration membranes made from sulfone polymers in the form of flat films. The membranes in US-A-5 928 774 exhibit a pronounced asymmetry; on their one surface they have a separating layer in the form of a skin, and adjoining this a supporting layer whose pore structure is free from caverns, also known as finger pores or macrovoids, and whose pores gradually become larger starting from the skin towards the second surface. With their pronounced asymmetry, the membranes in US-A-5 928 774 are optimised towards high transmembrane flows and high dirt-loading capacity in the application. Similar flat membranes with pronounced asymmetry made from a polyether sulfone are also described in US-A-5 886 059.

As the semi-permeable membranes described in the publications cited above are made from hydrophobic sulfone polymers, they have poor water wettability so that their use is very limited for the filtration of aqueous media. Furthermore, it is known that hydrophobic membranes have a strong, non-specific ability to adsorb e. g. proteins, so that a rapid coating of the membrane surface with predominantly higher molecular constituents from the liquid to be filtered frequently occurs during use, consequently resulting in a deterioration in the permeability. In order to improve

the water wettability and hence improve the permeability to aqueous media, various attempts have been made to make membranes based on sulfone polymers hydrophilic, while at the same time reducing the tendency to adsorb proteins. According to one of these approaches, hydrophilic polymers such as polyvinylpyrrolidone are admixed to the sulfone polymers.

EP-A-568 045 relates to hydrophilic polysulfone-based hollow-fiber membranes with an asymmetric structure that contain a polyglycol and a vinylpyrrolidone-based polymer to ensure the hydrophilic properties. On their side facing towards the lumen, the hollow-fiber membranes in EP-A-568 045 have a 0.1 to 3 μm thick separating layer with slot-like, 0.001 to 0.05 wide pores on the inner surface. This separating layer is adjoined by a supporting layer with network- or sponge-like structure and pores with a mean size of 1 to 5 μm. On the outer surface is a layer with a network- or sponge-like structure that is denser than the supporting layer.

The cut-offs of the membranes in EP-A-568 045 can be assigned to the ultrafiltration range, although the membranes are optimised for blood treatment. Permeabilities for water in the order of up to approx. 0.7 ml/cm$^2$·min·bar are cited for the hollow-fiber membranes in the examples given in EP-A-568 045. These membranes have a wall thickness of 40 μm, however, and are therefore relatively thin-walled and hence not suitable for ultrafiltration applications due to their insufficient pressure and breakage stability.

EP-A-828 553 discloses hollow-fiber membranes i. a. of polyether sulfone predominantly for the nanofiltration range and lower ultrafiltration range, i. e. for applications in particular for haemodialysis, haemodiafiltration and haemofiltration. The hollow-fiber membranes in EP-A-828 553 have a three-layer structure with a thin separating layer exhibiting open pores on the lumen side of the hollow-fiber membrane, an adjoining coarse-pored sponge-like or network-like supporting layer with homogeneous structure without finger pores and a subsequent outer layer whose pore size is larger than that of the separating layer, but smaller than that of the supporting layer. The membranes disclosed in the examples in EP-A-828 553 are essentially dialysis membranes whose permeability and transmembrane flows are too low and/or whose mechanical strength is insufficient for ultrafiltration applications due to the low membrane thicknesses.

Accordingly, there is still a need in the art for polymeric membranes, in particular PES membranes, which exhibit a combination of mechanical strength, permeability and transmembrane flows suitable for filtration purposes.

**Summary**

The present disclosure provides a hydrophilic, integrally asymmetric, semi-permeable hollow-fiber membrane made from a hydrophobic aromatic sulfone polymer and at least one hydrophilic polymer, the membrane comprising an inner surface facing towards its lumen, an outer surface facing outwards and an intermediate wall having a wall thickness and comprising an open-pore separating layer and an supporting layer having an asymmetric, sponge-like structure without finger pores, wherein adjoining to the wall of the inner surface the hollow-fiber membrane comprises an essentially isotropic zone; after which the pore size abruptly start increasing up to a maximum, after which the pore size decrease again, then adjoining a an essentially isotropic supporting layer which then is adjoined by the outer surface, wherein the separating layer has a cut-off of greater than 300 000 Daltons.

The present disclosure further provides a process for producing a hollow-fiber membrane, comprising the following steps:

(i) Providing a spinning solution comprising at least one hydrophobic aromatic sulfone polymer and at least one hydrophilic polymer;
(ii) Providing a bore liquid comprising water and glycerol;
(iii) Spinning a hollow fiber with a spinneret outer diameter for dope in the range of from 1100 to 3000 μm, a spinneret needle outer diameter in the range of from 600 to 2200 μm and a spinneret needle inner diameter in the range of from 400 to 1500 μm.

Furthermore, the present disclosure relates to certain uses in applications in microfiltration, in particular in clarification of aqueous liquids such as beverages or vinegar.

**Detailed Description**

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e. g., 1 to 10 includes 1.4, 1.9, 2.33, 5.75, 9.98, etc.). Also herein, recitation of "at least one" includes all numbers of one and greater (e. g., at least

2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100 % mole unless specified otherwise.

Parameters as described herein may be determined as described in detail in the experimental section.

Unless explicitly indicated, all preferred ranges and embodiments may be combined freely.

The present disclosure provides a hydrophilic, integrally asymmetric, semi-permeable hollow-fiber membrane made from a hydrophobic aromatic sulfone polymer and at least one hydrophilic polymer, the membrane comprising an inner surface facing towards its lumen, an outer surface facing outwards and an intermediate wall having a wall thickness and comprising an open-pore separating layer and an supporting layer having an asymmetric, sponge-like structure without finger pores, wherein adjoining to the wall of the inner surface the hollow-fiber membrane comprises an essentially isotropic zone; after which the pore size abruptly start increasing up to a maximum, after which the pore size decrease again, then adjoining a an essentially isotropic supporting layer which then is adjoined by the outer surface, wherein the separating layer has a cut-off of greater than 300 000 Daltons.

This combination of features allows for an improved hollow-fiber membrane for filtration purposes, in particular microfiltration purposes, which exhibit a desirable combination of high permeability, high trans membrane flow and simultaneous high mechanical stability.

Within the context of the present invention, an essentially isotropic area is hereby understood as an area of the membrane wall with an essentially constant pore size. The isotropic area can also be regarded as an area with flow channels with essentially constant mean diameter extending through the membrane wall. As with every membrane, the actual pore size varies slightly also in the hollow-fiber membrane according to the invention, i. e. it exhibits a certain pore size distribution, even if the pore size distribution appears visually isotropic. The invention therefore also covers embodiments of the essentially isotropic area in which the pore size changes by max. approx. 20-30 %.

In this regard, it is also preferred that the separation layer has a thickness of maximal 10 % of the wall thickness of the membrane, preferably of maximal 8 %, more preferably of maximal 6 %. Preferably, the separating layer also has an essentially isotropic pore structure. Thus, it is preferred that the essentially isotropic zone adjoining to the wall of the inner surface of the hollow-fiber membrane as disclosed herein comprises the open-pore separation layer. In particular, it is preferred in the context of the present disclosure that the essentially isotropic zone adjoining to the wall of the inner surface of the hollow-fiber membrane as disclosed herein has a proportion in the range of from 1 to 8 %, preferably from 2 to 7 % and more preferably from 3 to 6 % of the total thickness of the membrane wall. The pore structure of the membrane according to the invention thus differs from the pore structure of the membranes disclosed in US-A-4 933 081 or US-A-5 049 276 whose pore structure exhibits a gradient extending from the surface, and in which extending from the surface the pore size first decreases up to a layer with minimum pore size before the pore size then increases to the other surface. With these prior-art membranes, the separating layer with minimum pore size thus lies within the membrane wall. Moreover, it is preferred that the membranes according to the present disclosure exhibit a nominal pore size in the separation layer in the range of from 45 to 150 nm, preferably from 50 to 140 nm, more preferably from 55 to 130 nm, even more preferably from 70 to 100 nm. A nominal pore size within these ranges will yield desirable filtration characteristics such as a certain cut-off in combination with trans membrane flows and water permeability suitable for filtration purposes. The nominal pore size is determined by perm porometry according to ASTM F 316-03, for example with the PMI Advanced Porometer CFP-1020-APLC-GFR (PMI, Ithaca, NY, US).

In view of the pore structure of the hollow-fiber membranes according to the invention and the associated membrane properties it is an advantage if the zone of maximum pore size is located at a distance from the inner surface in the range between 15 and 40 % of the wall thickness. The size of the maximum pores in the zone of maximum pore size preferably is in the range of from 5 to 50 $\mu$m, preferably from 10 to 45 $\mu$m, more preferably from 15 to 40 $\mu$m. This creates a relatively coarse-pored structure in the supporting layer and consequently an essentially negligible contribution of the supporting layer to the flow resistance of the membrane wall. At the same time, however, the supporting layer continues to make a significant contribution to the mechanical stability of the hollow-fiber membranes according to the invention due to its homogeneous pore structure, i. e. due to its sponge-like or network-like pore structure without finger pores, frequently also referred to in the literature as caverns or macrovoids.

The pore structure and the pore sizes over the wall thickness can be evaluated with sufficient quality by means of conventional examination methods, such as using scanning or transmission electron micrographs with a magnification of 400:1, preferably with a magnification of 750:1.

It is assumed that the surface pores also influence the capillary forces in the membrane when it is wetted with aqueous liquids. In this regard, it is advantageous and thus preferred that the pores of the outer surface of the hollow-fiber membranes as disclosed herein exhibit maximum diameters of less than 1.5 μm, preferably less than 1.2 μm, more preferably less than 900 nm. Similarly, it is preferred that the pores of the inner surface of the hollow-fiber membranes according to the present disclosure exhibit maximum diameters of less than 3 μm, preferably of less than 2.5 μm, more preferably of less than 2 μm. Membranes having these maximum pore diameters in the inner or outer surfaces, preferably in the inner and the outer surfaces, were found to be well-suited for applications in microfiltration, such as filtering and/or clarification of beverages such as wine, beer and fruit juices, in particular in modules having cross-flow configuration.

It is also preferred that the wall thickness of the hollow-fiber membranes as disclosed herein is in the range of from 140 to 400 μm, preferably from 150 to 380 μm, more preferably 160 to 380 μm. At wall thicknesses below 140 μm, the mechanical properties of the hollow-fiber membrane fall below a certain desirable level, while at wall thicknesses above 400 μm, the trans membrane flow decreases. Similarly, in order to achieve a desirable flow through the lumina of the hollow-fiber membranes according to the present disclosure, particularly, a favourable pressure drop, it is preferred that the inside diameter of the hollow-fiber membranes as described herein is in the range of from 700 to 2000 μm, preferably from 800 to 1800 μm, more preferably from 900 to 1600 μm.

Preferably, the hollow-fiber membranes according to the invention exhibit a volume porosity of greater than 60 vol. %. This may ensure an adequate permeability. On the other hand, excessively high volume porosities are a disadvantage due to the loss of mechanical stability. Accordingly, it is preferred that the porosity is lower than 90 vol. %. The hollow-fiber membranes according to the present disclosure preferably have a volume porosity in the range of from 70 to 85 vol. %.

The hollow-fiber membranes according to the present invention preferably exhibit a trans membrane flow for water of at least 4 mL/($cm^2$·min·bar), preferably at least 5 mL/($cm^2$·min·bar), more preferably at least 6 mL/($cm^2$·min·bar), and even more preferably at least 7 mL/($cm^2$·min·bar). This ensures an adequate and stable filtration capacity in the application. It is further preferred that the hollow-fiber membranes as disclosed herein exhibit a trans membrane flow for water in the range of from 4 to 15 mL/($cm^2$·min·bar), preferably from 6 to 14 mL/($cm^2$·min·bar), and more preferably from 7 to 13 mL/($cm^2$·min·bar). Trans membrane flows in these ranges allow for adequate and stable filtration capacity in suitable applications without deteriorating the retention capacity or compromising the mechanical stability.

Preferably, the hollow-fiber membranes according to the present disclosure exhibit a tensile strength of at least 650 cN, preferably of at least 750 cN, more preferably of at least 850 cN. This will have the effect that the membranes exhibit mechanical stability more than sufficient for most microfiltration purposes. In this conjunction, it is also preferred that the membranes as disclosed herein a burst pressure in the range of from 10 to 30 bar, preferably from 12 to 25 bar, more preferably from 14 to 20 bar. Burst pressures within these ranges ensures sufficient stability for pressure loads from inside the side of the membrane lumen during the flow through the hollow-fiber membranes according to the present invention from the inside to the outside. Similarly, it is preferred that the hollow-fiber membranes as disclosed herein exhibit an implosion pressure in the range of from 1 to 15 bar, preferably from 2 to 12 bar, more preferably from 3 to 10 bar. With regard to yet another mechanical property desirable for filtration purposes of the hollow-fiber membranes according to the present disclosure, it is preferred that the hollow-fiber membranes exhibit an elongation of at least 16 %. Preferably, the hollow-fiber membranes as disclosed herein exhibit an elongation in the range of from 20 to 60 %, preferably from 22 to 52 %, more preferably from 24 to 50 %.

The hollow-fiber membranes according to the invention should be suitable for use in applications in the field of microfiltration. The separation behaviour of the hollow-fiber membrane is hereby determined by the separating layer that lies on the side of the membrane wall facing towards the lumen. Microfiltration membranes cover cut-offs with respect to the retention of particles or molecules of greater than 200 000 Daltons due to the size of the pores in the separating layer, which determine the separation behaviour. Preferably, the hollow-fiber membranes according to the present disclosure exhibit a cut-off of greater than 300 000 Daltons.

The cut-off is thereby determined from the retention capacity of the membrane for dextran molecules of different molar mass. The membrane to be characterised is thereby overflowed in cross-flow mode by a polydisperse aqueous dextran solution (pool). The sieving coefficients for dextran molecules of different molar mass are determined from the percentage of dextran molecules of different molar mass in the filtrate stream and in the pool. The cut-off is defined as the molar mass for which a sieving coefficient of 0.1 or a retention of 90 % is obtained.

The membranes according to the present disclosure are produced from a homogeneous spinning solution of a polymer component and a solvent system. The polymer component thereby comprises a hydrophobic aromatic sulfone polymer and at least one hydrophilic polymer. According to the present disclosure, the concentration of the sulfone polymer in the spinning solution is preferably in the range of from 17 to 27 wt. %. Below a concentration of 17 wt. %, disadvantages may arise in particular with respect to the mechanical stability of the hollow-fiber membranes obtained. On the other hand, membranes obtained from spinning solutions with more than 27 wt. % of the sulfone polymer may exhibit an excessively dense structure and insufficient permeability. The spinning solution preferably contains 20 to 25 wt. % of the hydrophobic aromatic sulfone polymer. The sulfone polymer can also contain additives such as antioxidants, nucleating agents, UV absorbers, etc. to selectively modify the properties of the membranes.

Advantageous hydrophobic aromatic sulfone polymers from which the membrane according to the present

disclosure is composed or which are employed in the method according to the invention are polysulfone, polyether sulfone, polyphenylene sulfone or polyaryl ether sulfone. Preferably, the hydrophobic aromatic sulfone polymer is a polysulfone or a polyether sulfone with the repeating molecular units shown in the following formulae (I) and (II):

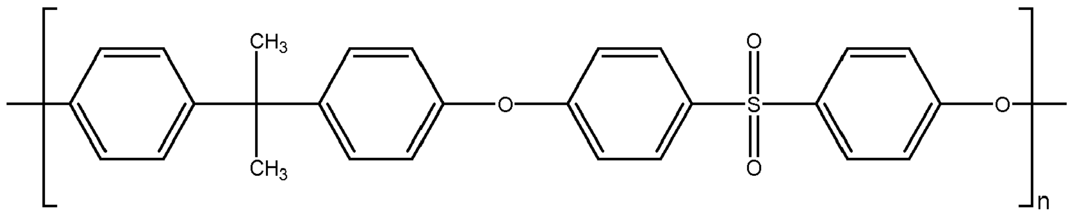

(I)

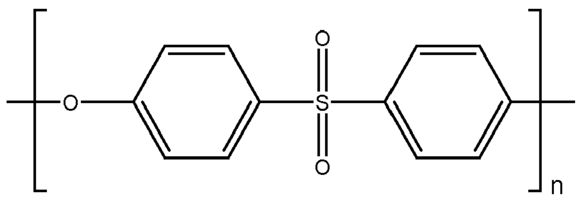

(II)

Long-chain polymers are advantageously employed as the at least one hydrophilic polymer that on the one hand exhibit a compatibility with the hydrophobic aromatic sulfone polymer and have repeating polymer units that in themselves are hydrophilic. A hydrophilic polymer with a mean molecular weight Mw of more than 10 000 Daltons, preferably of more than 20 000 Daltons, more preferably of more than 30 000 Daltons, is preferably employed. The hydrophilic polymer is preferably polyvinylpyrrolidone, polyethylene glycol, polyvinyl alcohol, polyglycol monoester, a polysorbitate such as polyoxyethylene sorbitan monooleate, carboxymethylcellulose or a modification or copolymer of these polymers. Polyvinylpyrrolidone and polyethylene glycol are particularly preferred.

Within the context of the present disclosure, the at least one hydrophilic polymer can also comprise mixtures of different hydrophilic polymers. The hydrophilic polymer can, for example, be a mixture of chemically different hydrophilic polymers or of hydrophilic polymers with different molecular weights, e. g. a mixture of polymers whose molecular weight differs by a factor of 5 or more. Preferably, the at least one hydrophilic polymer comprises a mixture of polyvinylpyrrolidone or polyethylene glycol with a hydrophilically modified aromatic sulfone polymer. It is also preferred that the hydrophilically modified aromatic sulfone polymer is a sulfonated aromatic sulfone polymer, in particular a sulfonated modification of the hydrophobic aromatic sulfone polymer employed in the membrane and in the method according to the present disclosure. Mixtures of polyether sulfone, sulfonated polyether sulfone and polyvinylpyrrolidone can be particularly advantageously employed. As a result of the presence of a hydrophilically modified aromatic sulfone polymer, hollow-fiber membranes with particularly stable hydrophilic properties in the application are obtained.

A large proportion of the at least one hydrophilic polymer is washed out of the membrane structure during production of the hollow-fiber membrane according to the invention. In view of the demanded hydrophilic properties of the hollow-fiber membranes according to the invention and their wettability, however, it is highly advantageous for a certain proportion of the at least one hydrophilic polymer to remain in the membrane. The finished hollow-fiber membrane therefore preferably contains the at least one hydrophilic polymer preferably in a concentration in the range between 1 and 15 wt. %, and particularly preferably between 3 and 10 wt. %, referred to the weight of the finished hollow-fiber membrane. Furthermore, the hydrophilic polymer can also be chemically or physically modified in the finished membrane. For example, polyvinylpyrrolidone can subsequently be made insoluble in water by cross-linking.

Accordingly, present disclosure further provides a process for producing a hollow-fiber membrane, comprising the following steps:

(i) Providing a spinning solution comprising at least one hydrophobic aromatic sulfone polymer and at least one hydrophilic polymer;
(ii) Providing a bore liquid comprising water and glycerol;
(iii) Spinning a hollow fiber with a spinneret outer diameter for dope in the range of from 1100 to 3000 $\mu$m, a spinneret needle outer diameter in the range of from 600 to 2200 $\mu$m and a spinneret needle inner diameter in the range of from 400 to 1500 $\mu$m.

The method according to the present disclosure employs the hydrophobic aromatic sulfone polymers and hydrophilic polymers as well as the solvents and further ingredients as described herein.

The solvent system to be employed must be matched to the hydrophobic aromatic sulfone polymer employed and to the at least one hydrophilic polymer so that a homogeneous spinning solution can be produced. The solvent system preferably comprises polar, aprotic solvents such as dimethylformamide, dimethylacetamide, dimethyl sulfoxide, N-methyl pyrrolidone or their mixtures, or protic solvents such as ε-caproiactam. Furthermore, the solvent system can contain up to 80 wt. % latent solvent, whereby in the context of the present invention a latent solvent is understood as a solvent that poorly dissolves the sulfone polymer or dissolves it only at elevated temperature. In cases where ε-caproiactam is used as a solvent, γ-butyrolactone, propylene carbonate or polyalkylene glycol can be employed, for example. In addition, the solvent system can contain non-solvents for the membrane-forming polymer such as water, glycerine, low-molecular polyethylene glycols with a mean molecular weight of less than 1000 Daltons or low-molecular alcohols such as ethanol or isopropanol. Preferably, the solvent system contains ε-caproiactam as a solvent. In this case a solvent system is particularly preferred that contains 35 to 50 wt. % ε-caproiactam referred to the weight of the solvent system, 35 to 50 wt. % γ-butyrolactone referred to the weight of the solvent system, and 0 to 10 wt. % non-solvent for the polymer component referred to the weight of the solvent system.

After preferably degassing and filtration to remove undissolved particles, the homogeneous spinning solution is extruded through the annular gap of a conventional hollow-fiber die to produce a hollow fiber. A bore liquid, i. e. an interior filler that is a coagulation medium for the hydrophobic aromatic sulfone polymer and at the same time stabilises the lumen of the hollow fiber is extruded through the central nozzle opening arranged coaxially to the annular gap in the hollow-fiber die. Within the present disclosure, the terms "hollow-fiber die" and "spinneret" may be used interchangeably. The bore liquid comprises water and glycerol, but may also comprise additional ingredients and/or solvents. Preferably, the bore liquid further comprises non-solvents for the membrane-forming polymer such as water, glycerine, low-molecular polyethylene glycols with a mean molecular weight of less than 1000 Daltons or low-molecular alcohols such as ethanol or isopropanol, and/or protic solvents such as caprolactam. Preferably, the bore liquid comprises water, ε-caproiactam and glycerol.

The width of the annular gap and the inside diameter of the central nozzle opening were selected according to the desired properties of the hollow-fiber membrane according to the present disclosure. That is, the spinneret exhibits a spinneret outer diameter for dope in the range of from 1100 to 3000 μm, a spinneret needle outer diameter in the range of from 600 to 2000 μm and a spinneret needle inner diameter in the range of from 400 to 1500 μm.

After leaving the hollow-fiber die (i. e. the spinneret) and before entering a coagulation medium, it is preferred that the hollow fiber passes through a climate-controlled zone with defined climatic conditions. The climate-controlled zone can thereby take the form of e. g. an encapsulated chamber. For technical reasons it may be necessary for an air gap to exist between the hollow-fiber die and the climate-controlled zone. This gap should, however, advantageously be as small as possible; the climate-controlled zone preferably directly follows the hollow-fiber die.

In this regard, it is preferred that the hollow fiber has a retention time in the climate-controlled zone of 0.5 to 10 s, whereby the climate-controlled zone contains air with a relative humidity of 40 to 95 % and a temperature of 50 to 70 °C. The air contained in the climate-controlled zone preferably has a relative humidity of 55 to 85 %. It is also preferred that the retention time of the hollow fiber in the climate-controlled zone is 1 to 7 s. In order to establish stable conditions in the climate-controlled zone, the air preferably flows through the climate-controlled zone with a velocity of less than 0.5 m/s and particularly preferably with a velocity in the range from 0.15 to 0.35 m/s.

As the hollow fiber is directed through the climate-controlled zone set to the climatic conditions preferred in the method according to the present disclosure, a precoagulation of the hollow fiber is induced by absorption on the outside of the hollow fiber of the air moisture acting as the non-solvent. Simultaneously, the retention time should be set within the range preferred in the method according to the present disclosure. These measures influence the formation of the outer layer of the hollow-fiber membrane according to the invention so that the outer layer obtains an essentially isotropic structure.

After passing through the climate-controlled zone, the precoagulated hollow fiber is directed through an aqueous coagulation medium preferably conditioned to 50 to 80 °C in order to complete the formation of the membrane structure and fix the membrane structure. The coagulation medium is preferably conditioned to a temperature in the range from 60 to 75 °C. Preferably, the coagulation medium is water or a water bath.

In the coagulation medium, the membrane structure is first precipitated to such an extent that it already has sufficient stability and can be diverted over e. g. deflection rollers or similar means in the coagulation medium. During the further course of the process, the coagulation is completed and the membrane structure stabilised. An extraction of the solvent system and soluble substances takes place here at the same time. In general, a large proportion of the hydrophilic polymer, e. g. of the polyvinylpyrrolidone, is extracted from the membrane structure, so that the coagulation baths serve at the same time as washing or extraction baths. Water is preferably employed as a coagulation or washing medium in these coagulation or washing baths.

After extraction, the hollow-fiber membrane thus obtained is dried and the dried membrane is then coiled. During extraction and drying of the membrane, a slight drawing may be advantageous in order to selectively set certain membrane properties, such as the surface porosity and the separation characteristics. The hollow-fiber membrane

according to the may then be texturised (if necessary) to improve the exchange properties of the hollow-fiber membrane in the bundle. Finally, the hollow-fiber membrane can be processed using conventional methods, e. g. wound onto a coil or formed directly into bundles with a suitable fiber count and length. Before production of the bundles, supplementary threads, e. g. in the form of multifilament yarns, can be added to the hollow-fiber membranes in order to ensure a spacing of the hollow-fiber membranes relative to one another and a better flow around the individual hollow-fiber membranes in the bundle.

With the method according as described herein, hollow-fiber membranes according to the present disclosure having the advantageous structure and properties as described herein are obtained.

Due to the unique combination of properties of the hollow-fiber membranes as described herein, preferably obtained from the method as described herein, the present disclosure further provides a use of the membranes as described herein for microfiltration or ultrafiltration. "Microfiltration" and "ultrafiltration" have the meaning common in the art. Preferably, the use as described herein comprises clarification and/or purification of liquid media, in particular aqueous liquids. Preferably, the aqueous liquids are selected from beverages and vinegar, wherein the beverages are preferably selected from wine, beer, fruit juice and soft drinks.

## Description of figures

Fig. 1: SEM picture of 20000x magnification of the outer surface of a hollow-fiber membrane according to the present disclosure.

Fig. 2: SEM picture of 8000x magnification of the inner surface of a hollow-fiber membrane according to the present disclosure.

Fig. 3: SEM picture of 100x magnification of a cross-section of a hollow-fiber membrane according to the present disclosure.

Fig. 4: SEM picture of 1000x magnification of a cross-section of a hollow-fiber membrane according to the present disclosure.

The present disclosure may further be exemplified by the following items:

## Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

Test Methods

Volume porosity:

A sample of at least 0.5 g of the membrane to be examined is dry weighed. The membrane sample is subsequently placed in a liquid that moistens the membrane material, however without causing swelling, for 24 hours such that the liquid penetrates into all pores. For the present polyamide membranes, a silicone oil with a viscosity of 200 mPa s at 25 °C (Merck) is used. The permeation of liquid into the membrane pores is visually discernable in that the membrane sample changes from an opaque to a glassy, transparent state. The membrane sample is subsequently removed from the liquid, liquid adhering to the membrane sample is removed by centrifuging at approx. 1800 g, and the mass of the thus pretreated wet, i. e. liquid-filled, membrane sample is determined by weighing.

The volume porosity ε is determined according to the following formula:

$$\text{Volume porosity } \varepsilon = \frac{(m_{wet} - m_{dry})/\rho_{liquid}}{(m_{wet} - m_{dry})/\rho_{liquid} + m_{dry}/\rho_{polymer}}$$

where:

$m_{dry}$ = weight of the dry membrane sample after wetting and drying [g]

$m_{wet}$ = weight of the wet, liquid-filled membrane sample [g]
$\rho_{liquid}$ = density of the liquid used [g/cm$^3$]
$\rho_{polymer}$ = density of the membrane polymer [g/cm$^3$]

Maximum separating pore:

The diameter of the maximum separating pore is determined by means of the bubble point method (ASTM No. 128-99 and F 316-03), for which the method described in DE-A-36 17 724 is suitable. Thereby, $d_{max}$ results from the vapor pressure $P_B$ associated with the bubble point according to the equation

$$d_{max} = \sigma_B / P_B$$

where $\sigma_B$ is a constant that is primarily dependent on the wetting liquid used during the measurement. For IPA, $\sigma_B$ is 0.61 $\mu$m·bar at 25 °C.

Transmembrane flow (water permeability):

A test cell with a defined number of hollow fibers and length is produced from the hollow-fiber membranes to be tested. For this, both ends of the hollow fibers are embedded in a polyurethane resin. After setting of the resin, the embeddings are cut to a length of approx. 30 mm with the lumina of the hollow-fiber membranes being opened by the cut. The hollow-fiber lumina in the embeddings must be checked for free passage. The free length of the hollow-fiber membranes between the embeddings is normally 120 +/- 10 mm. The number of hollow-fiber membranes must be such that, allowing for the free length and inside diameter of the hollow-fiber membranes, a filtration surface area of approx. 30 cm$^2$ is provided in the test cell.
The test cell is integrated into a test apparatus through which ultrafiltrated and deionised water conditioned to 25 °C flows with a defined test pressure (approx. 0.4 bar). The filtrated water volume obtained over a measuring time of 2 minutes, i. e. the permeate produced during the measurement, is determined gravimetrically or volumetrically. Before the start of the measurement, the system must be purged air-free. In order to determine the TMF, the inlet and outlet pressure at the test cell are measured in the test apparatus. The measurement is performed at 25 °C.
The transmembrane flow TMF is calculated using formula (III)

$$TMF = \frac{V_W}{\Delta t \cdot A_M \cdot \Delta p} \quad \left[\frac{ml}{cm^2 \cdot min \cdot bar}\right] \qquad (III)$$

where:

$V_W$ = Water volume flowing through the membrane sample during the measuring time [ml]
$\Delta t$ = Measuring time [min]
$A_M$ = Area of the membrane sample exposed to the flow (normally 30 cm$^2$)
$\Delta p$ = Pressure set during the measurement [bar]

Characterisation of the cut-off by determination of the retention capacity for dextran molecules of different molar mass

A polydisperse aqueous dextran solution (pool) flows in crossflow mode toward the membrane to be characterised. A defined wall shear rate and a defined filtrate flow density through the membrane is set. The content of dextran molecules of different molar mass MW in the filtrate flow or pool is determined by means of gel permeation chromatography (GPC).
The GPC spectrum of the pool or filtrate is thereby divided into 40 equidistant sections whose area is determined by numerical integration. A molar mass is assigned to each of these time intervals according to the calibration spectrum that is determined using monodisperse dextran molecules of known molar mass. The sieving coefficient of the membrane compared with dextran molecules of the molar mass MW is obtained by forming the ratio of the area segments of the GPC spectra of the filtrate and the pool assigned to this molar mass.

$$SK_{MW} = \frac{\text{Area (MW, permeate)}}{\text{Area (MW, pool)}} \quad \text{(IV)}$$

$$\text{Retention} = (1 - SK) \cdot 100\ [\%] \quad \text{(V)}$$

The retention coefficient $R_{MW}$ for dextran molecules of the molar mass MW is calculated as follows:

$$R_{MW} = 1 - SK_{MW} \quad \text{(VI)}$$

Since the determined retention profile is highly dependent on the test conditions (concentration polarisation), the filtrate flow density and wall shear rate must be clearly defined when determining the retention profile. For a hollow-fiber membrane module of length l containing n hollow-fiber membranes, filtrate flow density $Q_F$ and axial volumetric flow $Q_L$ are calculated as follows:

$$Q_L = \frac{n \cdot d^3 \cdot \gamma_W}{1.69 \cdot 10^{11}} \quad \text{(VII)}$$

$\gamma_W$: Wall shear rate = 2000/s
d: Inside diameter of the hollow-fiber membranes [$\mu$m]
n: Number of hollow-fiber membranes in the membrane module
$Q_L$: Axial volumetric flow in the lumen of the hollow-fiber membranes [ml/min]

$$Q_F = n \cdot \pi \cdot d \cdot l \cdot V_L \cdot 10^{-9} \quad \text{(VIII)}$$

$Q_F$: Filtrate flow rate [ml/min]
l: Free length of the hollow-fiber membrane in the membrane module [cm]
$V_L$: Velocity in the lumen [cm/min] ($V_L = 4 \cdot 10^8 \cdot Q_L/(n \cdot \pi \cdot d^2)$)
n: Number of hollow fibers in the membrane module

Composition of the dextran solution employed (manufacturer: Pharmacia Biotech; article designations: T10, T40, T70, T500)

| Dextran type: | T10 | T40 | T70 | T500 |
|---|---|---|---|---|
| Weight: | 0.50 g/l | 0.60 g/l | 0.7 g/l | 0.7 g/l |

The solutions are mixed with deionised water.

Breaking force, breaking strength

The breaking force of the hollow-fiber membranes is measured using a standard universal testing machine from Zwick, Ulm.

The hollow-fiber membrane sample is drawn at constant speed in the longitudinal direction until it breaks. The force required is measured in relation to the change in length and recorded in a force/elongation diagram. The measurement is performed as a multiple determination on several hollow-fiber membrane samples with 100 mm clamped length and at a drawing speed of 500 mm/min. The pretension weight is 2.5 cN. The force BK required for the break is output as a mean numerical value in cN.

The breaking strength $\sigma_B$ of the hollow-fiber membrane sample is obtained by standardisation of the breaking force BK to the cross-sectional area $A_Q$ of the membrane wall.

Bursting pressure

An approx. 40 cm long hollow-fiber membrane sample is formed as a loop with its ends embedded e. g. in polyurethane resin.
The membrane is wetted on the lumen side with a test liquid of 1.5 g/l methyl cellulose in water in order to fill the pores of the membrane while maintaining the pore structure. This makes the membrane walls impermeable to gas. Nitrogen is then admitted to the lumen side of the hollow-fiber membrane sample, whereby a linear increase in pressure (2 bar/min) is generated at the sample using a pressure booster station, throttle valve and high-pressure reservoir.
The pressure at the inlet to the sample is measured and documented on a plotter. The pressure is increased until the membrane sample bursts. When the membrane sample bursts or explodes, the pressure at the test cell drops suddenly. The pressure at the reversing point of the pressure increase is read off as the bursting pressure.

Force and elongation at break:

Measuring the force at break of the membrane takes place using a standard, universal testing machine from Zwick (Ulm, Germany).
The hollow-fiber membrane sample is drawn at constant speed in the longitudinal direction until it breaks. The force required is measured in relation to the change in length and recorded in a force/elongation diagram. The measurement is performed as a multiple determination on several hollow-fiber membrane samples with 100 mm clamped length and at a drawing speed of 500 mm/min. The pretension weight is 2.5 cN. The elongation at break is output as a mean numerical value in % of the original length.

Example 1

A spinning solution was prepared by intensively mixing 21 wt.-% polyethersulfone (Ultrason E 6020, BASF), 12.6 wt.-% polyvinylpyrrolidone (PVP K30, ISP), 31.54 wt.-% ε-caprolactam, 31.54 wt.-% γ-butyrolactone, 3.32 wt.-% glycerol and 0.8 % water at a temperature of about 100 °C. The resulting spinning solution was cooled down to about 60 °C, filtrated and degassed. A spinneret tempered to 35 °C and having and outer diameter for dope of 0.22 mm, a needle outer diameter of 0.12 mm and a spinneret needle inner diameter of 930 μm was used. By using the above-mentioned spinning solution and a mixture of ε-caprolactam, glycerol and water in a ratio of 47:37:16 as bore liquid in the spinneret needle of the spinneret, a hollow fiber was generated. This hollow fiber was transferred through a climate chamber conditioned to a temperature of 75 °C and 85 % relative humidity such that a residual time of about 6 s was maintained. After that, the hollow fiber was transferred into a water-containing precipitation bath tempered to about 68 °C, thereby fixing the membrane structure. Directly after this coagulation and fixation of the membrane, the wet hollow-fiber membrane was assembled to hollow-fiber membrane bundle having a length of about 1.3 m and comprising about 450 hollow-fiber membranes, extracted with water having a temperature of about 90 °C for about 1 h and subsequently dried with air at a temperature of about 90 °C for about 2 h. The hollow-fiber membranes obtained via this procedure had a physical inner diameter of about 1200 μm and a wall thickness of about 280 μm.
Further properties of the hollow-fiber membranes according to example 1 are summarized in table 1.

Comparative Example 1

In order to produce a homogeneous spinning solution, 21.00 wt. % polyether sulfone (Ultrason E 6020, BASF), 12.60 wt. % polyvinylpyrrolidone (PVP K30, ISP), 31.54 wt. % ε-caprolactam, 31.54 wt. % γ-butyrolactone and 3.32 wt. % glycerine were intensively mixed at a temperature of approx. 100°C. The resulting solution was cooled to approx. 60°C, degassed, filtered and conveyed to the annular gap of a hollow-fiber die maintained at 35 °C with a gap width of 0.24 mm and an inside diameter of the die needle of 0.6 mm. For the formation of the lumen and the lumen-side separating layer, an interior filler consisting of ε-caprolactam/glycerine/water in the ratio of 47:37:16 by weight was extruded through the needle of the hollow-fiber die. The hollow fiber formed was conducted through a conditioned climate-controlled channel (climate: 60 °C; 60 % relative humidity, t = 4 s), precipitated in a precipitation bath containing water conditioned to approx. 70 °C, and the membrane structure fixed. Immediately after fixing, the wet membrane was made up to approx. 1 m long hollow-fiber membrane bundles with approx. 900 hollow fibers, extracted for 3 hours with approx. 90 °C hot water and subsequently dried for approx. 2 hours with 90 °C hot air. The hollow-fiber membranes contained in the bundles had a lumen diameter of approx. 0.75 mm and a wall thickness of approx. 0.22 mm.
The membrane exhibited a transmembrane flow in water $TMF_W$ of 1.28 ml/($cm^2$·min·bar). A cut-off of approx. 62 000 Daltons was determined from the separation curve obtained with dextrans. In the tensile test, the membranes showed a breaking force of 510 cN, corresponding to a breaking strength of approx. 760 cN/$mm^2$. The resulting product of the transmembrane flow and breaking force determined in this manner was 653 cN·ml/($cm^2$·min·bar). The bursting

pressure of the hollow-fiber membranes in this example was 15.75 bar.

The examination under the scanning electron microscope showed the membrane to have a separating layer with a thickness of approx. 6 μm on its lumen side, that was adjoined towards the outside by an approx. 160 to 170 μm thick supporting layer, within which the size of the pores increased sharply starting from the separating layer up to a zone with maximum pore size at approx. 20 to 25 % of the wall thickness, and after passing through the maximum decreased towards the outside up to an outer layer. The supporting layer was adjoined by the outer layer with a thickness of approx. 50 μm, within which an essentially isotropic pore structure, i. e. an essentially constant pore size, prevailed.

Comparative Example 2

In order to produce a homogeneous spinning solution, 19.46 wt. % polyether sulfone (Ultrason E 6020, BASF), 13.65 wt. % polyvinylpyrrolidone (PVP K30, ISP), 31.91 wt. % ε-caprolactam, 31.61 wt. % γ-butyrolactone and 3.37 wt. % glycerine were intensively mixed at a temperature of approx. 100 °C. The resulting solution was cooled to approx. 60 °C, degassed, filtered and conveyed to the annular gap of a hollow-fiber die maintained at 35 °C with a gap width of 0.16 mm and an inside diameter of the die needle of 0.6 mm. For the formation of the lumen and the lumen-side separating layer, an interior filler consisting of ε-caprolactam/glycerine/water in the ratio of 45:37:18 by weight was extruded through the needle of the hollow-fiber die. The hollow fiber formed was conducted through a conditioned climate-controlled channel (climate: 60 °C; 60 % relative humidity, t = 4 s), precipitated in a precipitation bath containing water conditioned to approx. 75 °C, and the membrane structure fixed. Immediately after fixing, the wet membrane was made up to approx. 1 m long hollow-fiber membrane bundles with approx. 900 hollow fibers, extracted for 3 hours with approx. 90 °C hot water and subsequently dried for approx. 2 hours with 90 °C hot air. The hollow-fiber membranes had a lumen diameter of approx. 0.70 mm and a wall thickness of approx. 0.15 mm.

The examination under the scanning electron microscope showed the membrane to have a separating layer with a thickness of approx. 6 μm on its lumen side, that was adjoined towards the outside by a supporting layer within which the size of the pores increased starting from the separating layer up to a zone with maximum pore size at approx. 25 to 30 % of the wall thickness, and after passing through the maximum decreased towards the outside up to an outer layer. The pores in the zone of maximum pore size were smaller in the hollow-fiber membrane in Comp. Ex. 2 than in the hollow-fiber membrane produced according to Comp. Ex. 1. The supporting layer was adjoined by the outer layer with essentially isotropic pore structure, i. e. an essentially constant pore size, and a thickness of approx. 45 μm.

The properties of the membranes are summarized in table 1.

Table 1: Properties of the membranes according to the examples and comparative examples.

| | Ex. 1 | Comp. Ex. 1 | Comp. Ex. 2 |
|---|---|---|---|
| Physical inner diameter [μm] | 1200 | 750 | 700 |
| Wall thickness [μm] | 280 | 220 | 150 |
| TMF [mL/cm$^2$ min bar] | 7 | 1.28 | 1.36 |
| Nominal pore diameter [nm] | 90 | | |
| Tensile strength [cN] | 930 | 510 | 253 |
| Elongation [%] | 27 | | |
| Burst pressure [bar] | 15.0 | 15.75 | 11.5 |
| Implosion pressure [bar] | 5.8 | | |
| Bubble point in IPA [bar] | 1.4 | | |

## Claims

1. Hydrophilic, integrally asymmetric, semi-permeable hollow-fiber membrane made from a hydrophobic aromatic sulfone polymer and at least one hydrophilic polymer, the membrane comprising an inner surface facing towards its lumen, an outer surface facing outwards and an intermediate wall having a wall thickness and comprising an open-pore separating layer and an supporting layer having an asymmetric, sponge-like structure without finger pores, wherein adjoining to the wall of the inner surface the hollow-fiber membrane comprises an essentially isotropic zone; after which the pore size abruptly start increasing up to a maximum, after which the pore size decrease again, then adjoining a an essentially isotropic supporting layer which then is adjoined by the outer surface,

wherein the separating layer has a cut-off of greater than 300 000 Daltons.

2. The hollow-fiber membrane according to claim 1, wherein the membrane exhibits a nominal pore size in the separation layer in the range of from 45 to 150 nm, preferably from 50 to 140 nm, more preferably in the range of from 55 to 130 nm.

3. The hollow-fiber membrane according to any one of the preceding claims, wherein the essentially isotropic zone adjoining to the wall of the inner surface the hollow-fiber membrane has a proportion in the range of from 1 to 8 %, preferably from 2 to 7 %, more preferably from 3 to 6 % of the total thickness of the membrane wall.

4. The hollow-fiber membrane according to any one of the preceding claims, wherein the essentially isotropic zone adjoining to the wall of the inner surface comprises the open-pore separation layer.

5. The hollow-fiber membrane according to any one of the preceding claims, wherein the wall thickness is in the range of from 140 to 400 μm, preferably in the range of from 150 to 380 μm, more preferably in the range of from 160 to 360 μm.

6. The hollow-fiber membrane according to any one of the preceding claims, wherein the physical inner diameter of the hollow-fiber membrane is in the range of from 700 to 2000 μm, preferably from 800 to 1800 μm, more preferably from 900 to 1600 μm.

7. The hollow-fiber membrane according to any one of the preceding claims, wherein the pores of the outer surface exhibit maximum diameters of less than 1.5 μm, preferably less than 1.2 μm, more preferably of less than 1 μm, even more preferably less than 900 nm.

8. The hollow-fiber membrane according to any one of the preceding claims, wherein the inner pores of the inner surface exhibit maximum diameters of less than 3 μm, preferably of less than 2.5 μm, more preferably of less than 2 μm.

9. The hollow-fiber membrane according to any one of the preceding claims, wherein the zone with maximum pore size is located at a distance from the inner surface in the range between 15 and 40 % of the wall thickness.

10. The hollow-fiber membrane according to any one of the preceding claims, wherein the size of the maximum pores in the zone with maximum pore sizes is in the range of from 5 to 50 μm, preferably from 10 to 45 μm, more preferably from 15 to 50 μm.

11. The hollow-fiber membrane according to any one of the preceding claims, wherein the membrane exhibits a trans membrane flow for water of at least 4 mL/($cm^2$·min·bar), preferably at least 5 mL/($cm^2$·min·bar), more preferably at least 6 mL/($cm^2$·min·bar), and even more preferably at least 7 mL/($cm^2$·min·bar).

12. The hollow-fiber membrane according to any one of the preceding claims, wherein the membrane exhibits a tensile strength of at least 650 cN, preferably of at least 750 cN, and more preferably of at least 850 cN.

13. The hollow-fiber membrane according to any one of the preceding claims, wherein the membrane exhibits an elongation in the range of from 20 to 60 %, preferably from 22 to 52 %, more preferably from 24 to 50 %.

14. A process for producing a hollow-fiber membrane, comprising the following steps:

(i) Providing a spinning solution comprising at least one hydrophobic aromatic sulfone polymer and at least one hydrophilic polymer;
(ii) Providing a bore liquid comprising water and glycerol;
(iii) Spinning a hollow fiber with a spinneret outer diameter for dope in the range of from 1100 to 3000 μm, a spinneret needle outer diameter in the range of from 600 to 2200 μm and a spinneret needle inner diameter in the range of from 400 to 1500 μm.

15. Use of the hollow-fiber membrane according to any one of claims 1 to 13 for microfiltration of aqueous liquids.

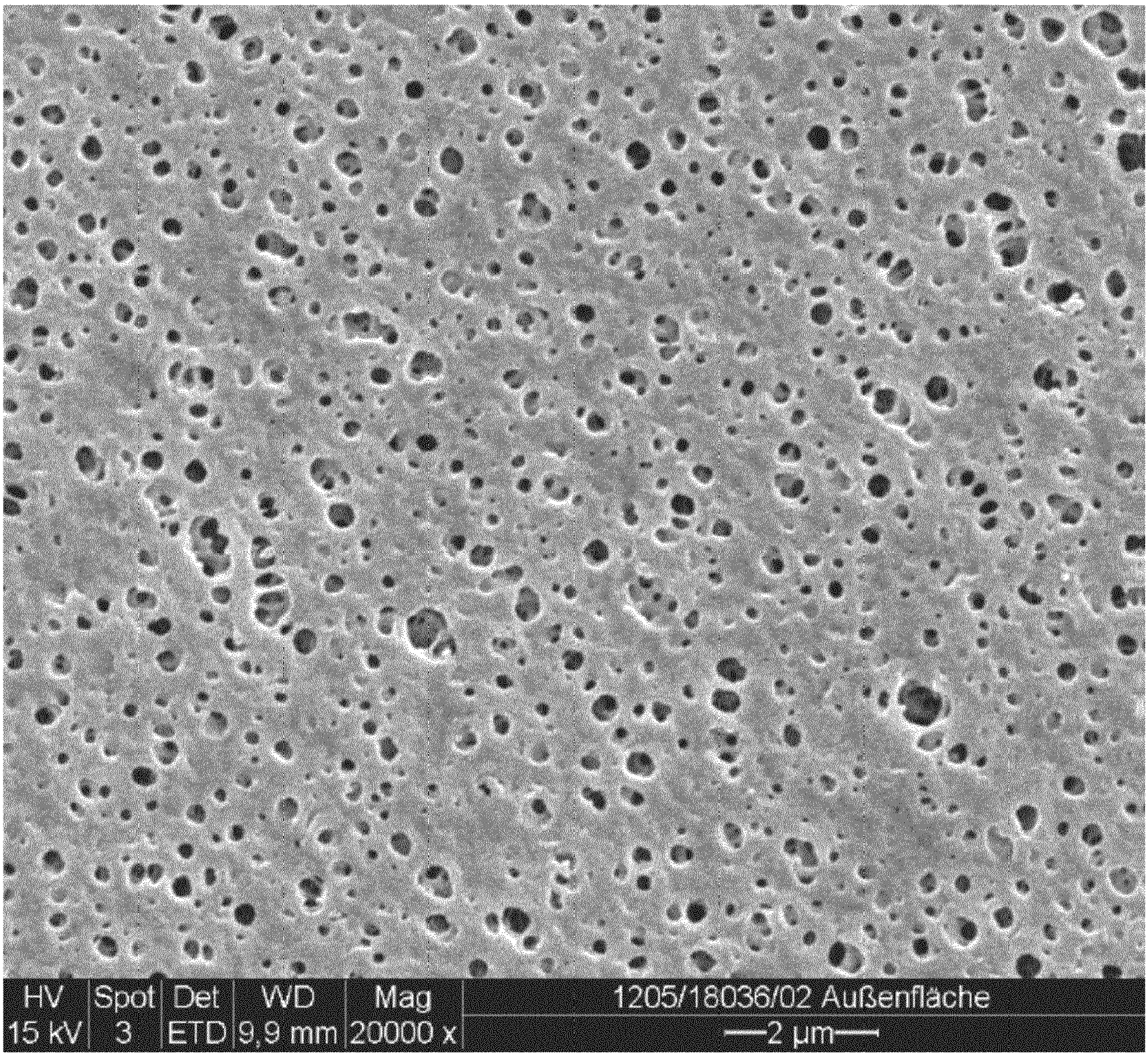
HV
15 kV
Spot
3
Det
ETD
WD
9,9 mm
Mag
20000 x
1205/18036/02 Außenfläche
2 µm

Figure 1

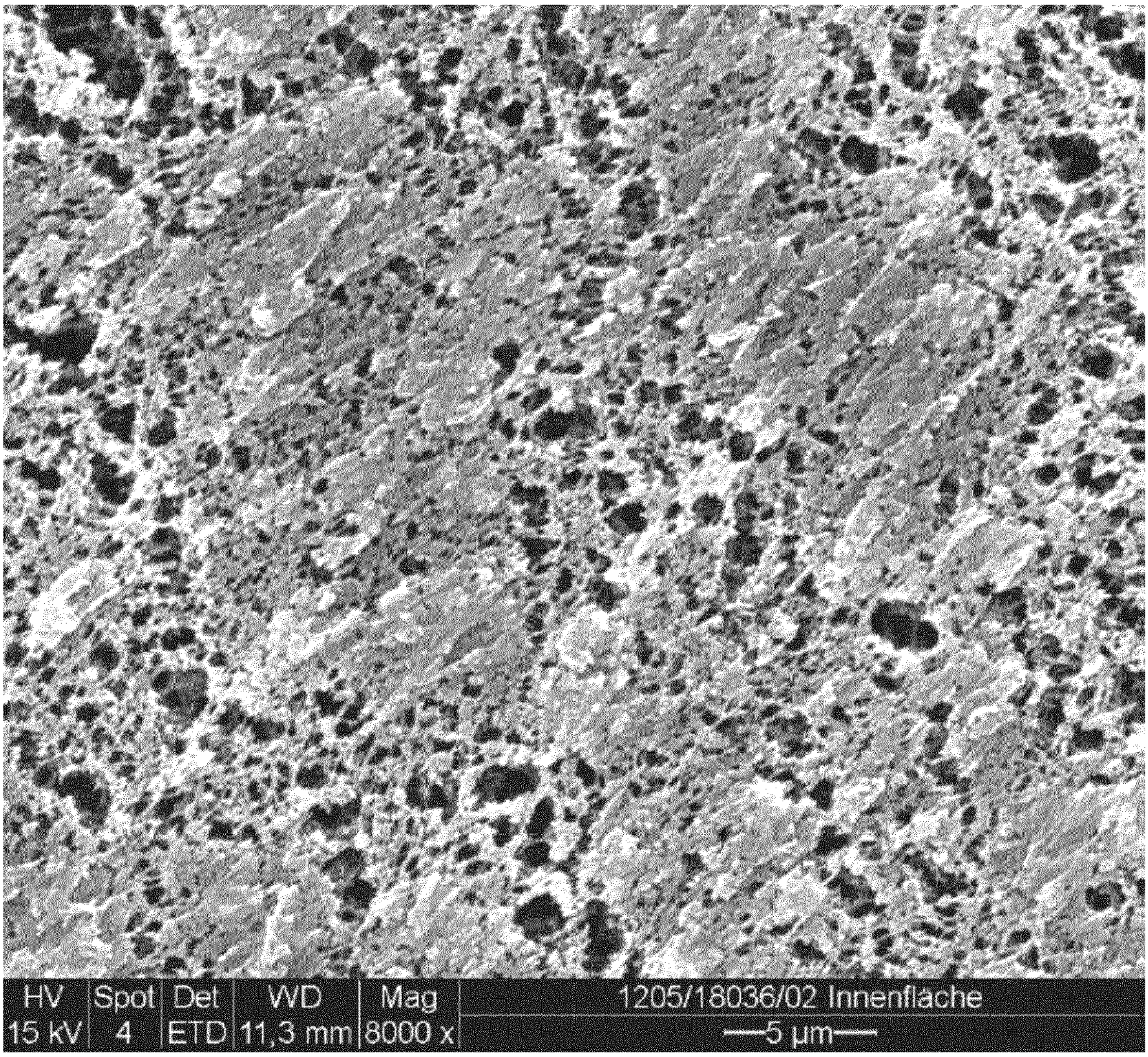
HV
15 kV
Spot
4
Det
ETD
WD
11,3 mm
Mag
8000 x
1205/18036/02 Innenflache
5 µm

Figure 2

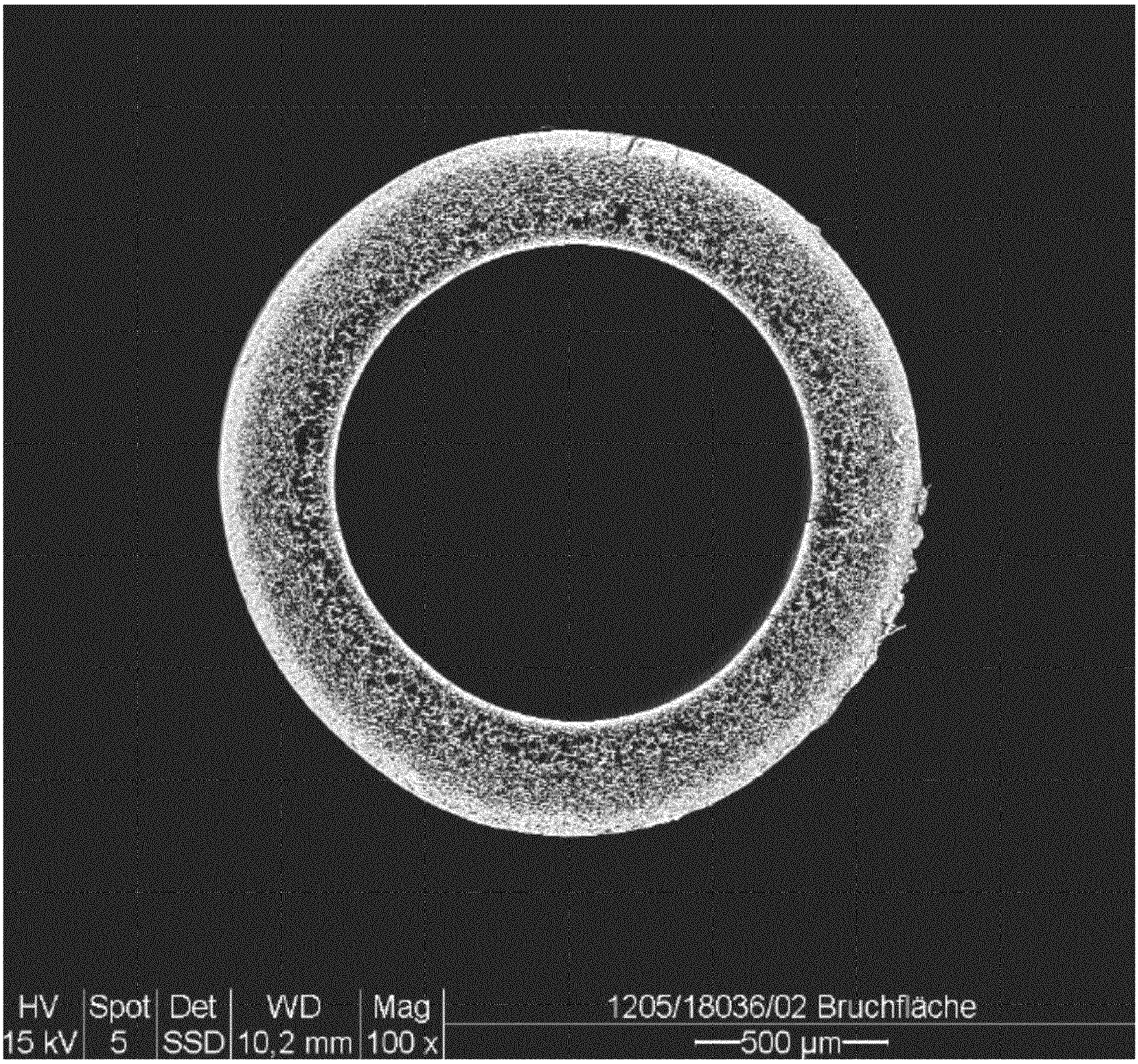
HV
15 kV
Spot
5
Det
SSD
WD
10,2 mm
Mag
100 x
1205/18036/02 Bruchfläche
500 µm

Figure 3

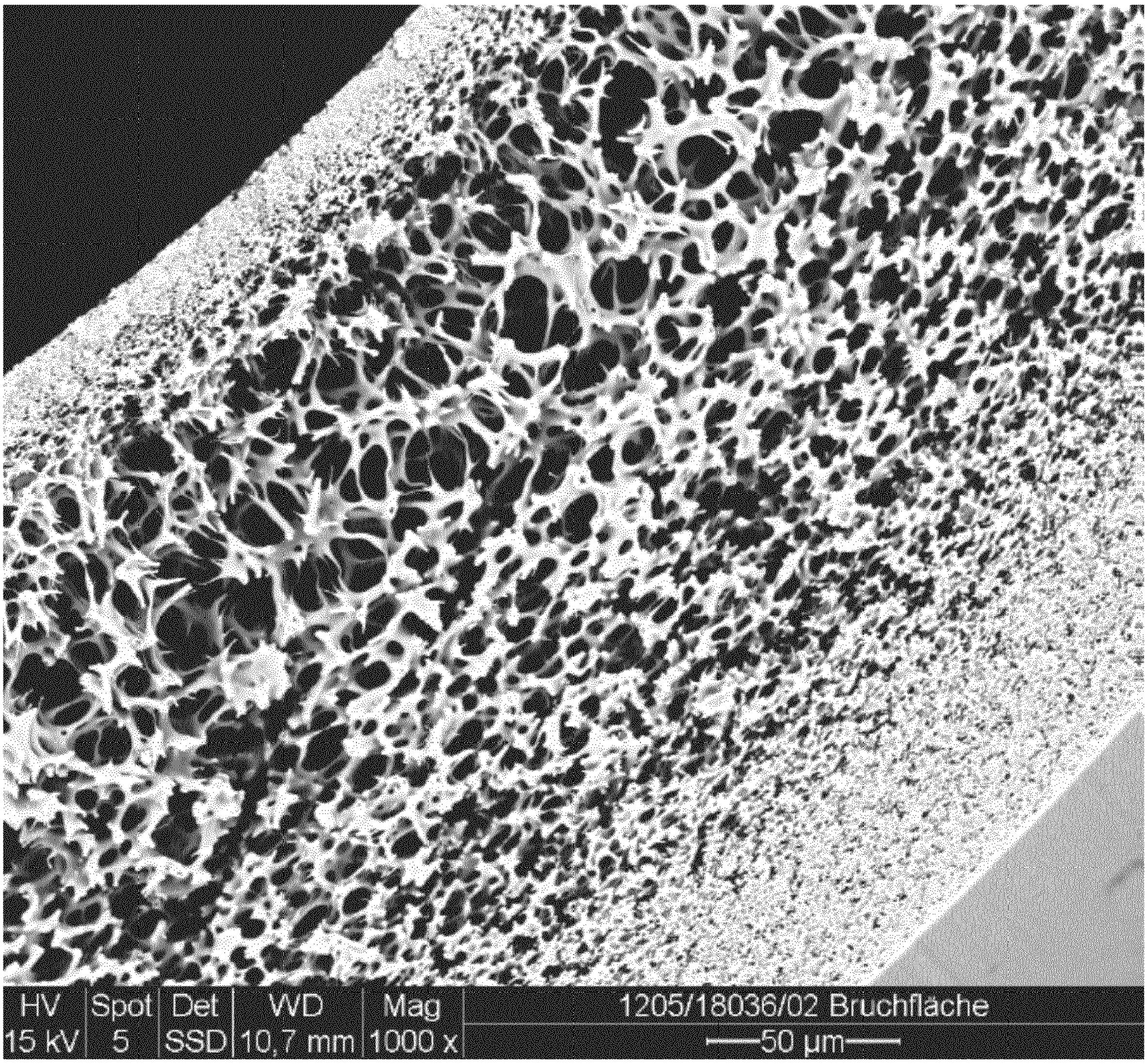
HV
15 kV
Spot
5
Det
SSD
WD
10,7 mm
Mag
1000 x
1205/18036/02 Bruchfläche
50 µm

Figure 4

Europäisches Patentamt
European Patent Office
Office européen des brevets

# EUROPEAN SEARCH REPORT

Application Number
EP 18 17 5151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/128488 A1 (MEMBRANA GMBH [DE]; ANSORGE WOLFGANG [DE]; SPINDLER ERNST [DE]; KRUEGE) 15 November 2007 (2007-11-15) * abstract * * examples 1-3 * * comp. ex. 1 * * claims 1-26 * | 1,3-6,9, 10,14 | INV. B01D69/08 B01D71/68 |
| A | WO 02/058828 A1 (INNOVASEP TECHNOLOGY CORP [US]; HERCZEG ATTILA [US]) 1 August 2002 (2002-08-01) * abstract * * claims 1-35 * * paragraphs [0058], [0065], [0065] * | 1-15 | |
| X,D<br>A | EP 0 361 085 B1 (AKZO NV [NL]) 24 March 1993 (1993-03-24) * abstract * * page 2, lines 37-43 * * tables 1,2 * * page 5, line 21 * * examples 1-6 * | 1,5,6, 9-13,15<br>14 | |
| X | US 8 225 941 B2 (OGAWA ET AL.) 24 July 2012 (2012-07-24) * abstract * * figures 3,7 * * column 4, lines 59-67 * * examples 1-4 * * claims 1-5 * | 1,2, 5-10,15 | |

TECHNICAL FIELDS SEARCHED (IPC)
B01D

The present search report has been drawn up for all claims

1

| Place of search | Date of completion of the search | Examiner |
|---|---|---|
| Munich | 11 December 2018 | Lançon, Eveline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 18 17 5151

This annex lists the patent family members relating to the patent documents cited in the above-mentioned European search report. The members are as contained in the European Patent Office EDP file on
The European Patent Office is in no way liable for these particulars which are merely given for the purpose of information.

11-12-2018

| Patent document cited in search report | Publication date | Patent family member(s) | Publication date |
|---|---|---|---|
| WO 2007128488 A1 | 15-11-2007 | AT 541637 T | 15-02-2012 |
| | | CN 101484234 A | 15-07-2009 |
| | | DK 2024068 T3 | 26-03-2012 |
| | | EP 2024068 A1 | 18-02-2009 |
| | | ES 2378401 T3 | 12-04-2012 |
| | | JP 5065379 B2 | 31-10-2012 |
| | | JP 2009536090 A | 08-10-2009 |
| | | KR 20090009308 A | 22-01-2009 |
| | | US 2010224553 A1 | 09-09-2010 |
| | | WO 2007128488 A1 | 15-11-2007 |
| WO 02058828 A1 | 01-08-2002 | CA 2434940 A1 | 01-08-2002 |
| | | EP 1359995 A1 | 12-11-2003 |
| | | JP 2004525755 A | 26-08-2004 |
| | | US 2004050791 A1 | 18-03-2004 |
| | | WO 02058828 A1 | 01-08-2002 |
| EP 0361085 B1 | 24-03-1993 | AU 616793 B2 | 07-11-1991 |
| | | DE 3829752 A1 | 22-03-1990 |
| | | EP 0361085 A1 | 04-04-1990 |
| | | ES 2054960 T3 | 16-08-1994 |
| | | JP 3068831 B2 | 24-07-2000 |
| | | JP H02211231 A | 22-08-1990 |
| | | US 4976859 A | 11-12-1990 |
| US 8225941 B2 | 24-07-2012 | EP 2221102 A1 | 25-08-2010 |
| | | JP 5504560 B2 | 28-05-2014 |
| | | JP 2009095808 A | 07-05-2009 |
| | | US 2010219122 A1 | 02-09-2010 |
| | | WO 2009051168 A1 | 23-04-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0361085 B1
- US 5928774 A
- US 5886059 A
- EP 568045 A
- EP 828553 A
- US 4933081 A
- US 5049276 A
- DE 3617724 A